# EUROPEAN PATENT SPECIFICATION

(11) **EP 0 389 869 B1**
(45) Date of publication and mention of the grant of the patent: **18.05.1994**
(21) Application number: 90104841.3
(22) Date of filing: 14.03.1990
(51) Int. Cl.: E05F 11/48, B60J 1/17

(54) **Window regulator apparatus**
Fensterheber
Dispositif lève-vitre

(30) Priority: 29.03.1989 JP 35804/89 U
(43) Date of publication of application: 03.10.1990
(73) Proprietor: AISIN SEIKI KABUSHIKI KAISHA, Kariya City Aichi Pref. (JP)
(72) Inventor: Kuki, Nobuyuki, Toyohashi city (JP); Isomura, Yukio, Chiryu city (JP); Suzumura, Hirokazu, Toyota city (JP); Sakakibara, Yoshikazu, Anjo city (JP)
(74) Representative: Tiedtke, Harro, Dipl.-Ing.

(56) References cited:
- DE-A- 2 634 778
- DE-B- 2 633 969
- GB-A- 984 675
- US-A- 4 644 695
- US-A- 4 658 546
- US-A- 4 669 221

## Description

The present invention relates to a window regulator apparatus according to the features indicated in the preamble of claim 1.

The present invention starts from a prior art as it is known from US 4 669 221. In this document an apparatus is disclosed including a rail member fixed within a door, driving means (6) fixed within said door for up- and downwardly moving a window glass (2) along said rail member; a wire member (7) hung on said pulley and driving means (9, 10) for transmitting a moving force to said window glass; a bracket member (8) fixedly connected to said window glass and operatively connected to said wire member.

Generally, a window regulator apparatus of a wire type is known, for example, by Japanese Utility Model Laid-Open No. 62 (1987) - 671. This window regulator comprises a door, a window glass up- and downwardly movably supported on the door, a guide rail fixed in the door and rotatably supporting pulleys at upper and lower portions thereof, a driving mechanism laterally fixed between the pulleys in the door, a wire hung between the pulleys and the driving mechanism, a bracket fixedly connected to the window glass and connected to the wire, and a roller fixed to the bracket and slidably provided on the guide rail, thereby moving the wire by actuating the driving mechanism and up- and downwardly moving the window glass through the roller and bracket.

However, power of transverse direction is applied to the window glass in the above mentioned window regulator apparatus, the window glass comes down and is contacted with the guide rail. As this result, there is the danger of the window glass being damaged by the guide rail.

One of the objects of the present invention is to provide an improved window regulator apparatus that overcomes the above mentioned disadvantages of the prior art. Another object of the present invention is to provide an improved window regulator apparatus, wherein a window glass is supported by a resilient member, when power of transverse direction is applied to the window glass and the window glass comes down, whereby there is no contact between the window glass and the guide rail, so that the window glass is prevented from being damaged.

According to the present invention this object is achieved by the advantageous measures indicated in claim 1.

Hence, according to the present invention, a resilient member is provided on said pulley for preventing said rail member and window glass from contact.

The invention is advantageously developed by the measures mentioned in the subclaims.

The present invention will be better understood from the following detailed description when considered in connection with accompanying drawings, wherein
Fig. 1 shows a plain view of a window regulator apparatus according to the present invention;
Fig. 2 is a sectional view of Fig. 1; and
Fig. 3 is a view similar to Fig. 2, however, showing a main portion of the window regulator apparatus.

### DETAILED DESCRIPTION OF THE PREFERRED EMBODIMENT

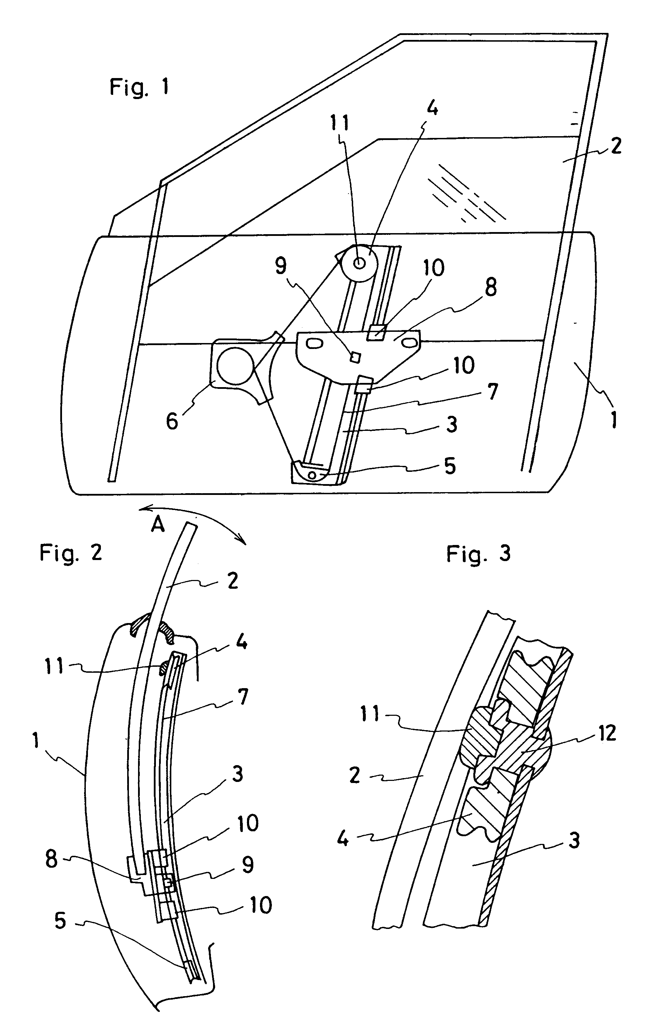

Referring to Figs. 1, 2, a window glass 2 is up- and downwardly movably disposed in a door 1. A guide rail 3 is fixedly connected in the door thereto. A pulley 4 is rotatably mounted on a upper portion of the guide rail 3 and a shoe 5 is fixed to a lower portion of the guide rail 3. A driving mechanism 6 is laterally located between the pulley 4 and the shoe 5, and a wire 7 is hung on the pulley 4 and shoe 5 and driving mechanism 6 in a triangular shape. A bracket 8 is fixed to a lower portion of the window glass 2 and is fixed to the wire 7 through a hook 9 and is up-and downwardly movably supported through shoes 10, 10.

When the driving mechanism 5 is actuated in the window regulator apparatus according to the above mentioned construction, the wire 7 is moved and the window glass 2 is up- and downwardly moved along the guide rail 3 through bracket 8, hook 9, and shoes 10, 10.

As shown in Figs. 1 to 3, a resilient member 11 is fixedly connected to a head portion of a pin 12 which is a pivot shaft of the pulley 4 rotatably supported on a top portion of the guide rail 3. Accordingly, the window glass 2 is supported by the resilient member before the guide rail 3 and the window glass 2 are contacted, even if force of transverse direction (direction A shown in Fig. 2) is applied on the window glass 2 and the window glass 2 comes down. Therefore, the window glass 2 and the guide rail 3 are prevented from the contact and the window glass 2 is prevented from the damage. It is not necessary to provide a clearance between the window glass 2 and the guide rail 3 for preventing from the contact, and it is possible to reduce the width of the door 1.

According to the present invention, the window regulator apparatus includes the door 1, the window glass 2 up- and downwardly movably supported on the door 1, the guide rail 3 fixedly connected to the door 1 and rotatably supporting the pulley 4 on the upper portion of the guide rail 3, the driving mechanism 6 laterally fixed between the pulley 4 and shoe 5 within the door 1, the wire 7 hung on pulley 4 and shoe 5 and driving mechanism 6, and the bracket 8 fixed to the window glass 2 and connected to the wire 7. The resilient member 11 is fixedly connected to the head portion of the pin 9 which is a pivot shaft of the pulley 4 rotatably supported on the top portion of the guide rail 3. Accordingly, the window glass 2 and the guide rail 3 are prevented from the contact and the window glass 2 is prevented from the damage. Further, it is not necessary to provide a clearance between the window glass 2 and the guide rail 3 for preventing from the contact, so that it is possible to reduce the width of the door 1.

In case that the resilient member 11 is directly mounted on the pulley 4, the above mentioned same function and results can be attained.

## Claims

1. A window regulator apparatus including
a rail member (3) fixed within a door;
a pulley (4) mounted on said rail member;
driving means (6) fixed within said door for up- and downwardly moving a window glass (2) along said rail member;
a wire member (7) hung on said pulley and driving means (9, 10) for transmitting a moving force to said window glass;
a bracket member (8) fixedly connected to said window glass and operatively connected to said wire member;
**characterized by**
a resilient member (11) provided on said pulley for preventing said rail member and window glass from contact.

2. A window regulator apparatus as set forth in claim 1, wherein said pulley is provided on an upper portion of said rail member.

3. A window regulator apparatus as set forth in claim 1, further comprising:
pin means (12) fixedly connected to said rail member.

4. A window regulator apparatus as set forth in claim 3, wherein said resilient member is mounted on said pin means, which is a pivot shaft of said pulley.

## Patentansprüche

1. Fensterheber mit
einem Schienenteil (3), das in der Tür fest eingebaut ist;
einer Rolle (4), die an dem Schienenteil angebracht ist;
einer Antriebseinrichtung (6), die in der Tür fest eingebaut ist, um ein Fensterglas (2) entlang dem Schienenteil auf- und abwärts zu bewegen;
einem Drahtteil (7), das aufgehängt an der Rolle und Antriebseinrichtung (9, 10) die eine Bewegungskraft auf das Fensterglas überträgt;
einem Trägerteil (8), daß fest mit dem Fensterglas verbunden ist und betrieblich mit dem Drahtteil verbunden ist;
gekennzeichnet durch
ein elastisches Teil (11), auf der Rolle vorgesehen ist, um eine Berührung zwischen dem Schienenteil und Fensterglas zu vermeiden.

2. Fensterheber nach Patentanspruch 1, bei dem die Rolle an einem oberen Stück der Führungsschiene angebracht ist.

3. Fensterheber nach Patentanspruch 1, ferner mit einer Zapfeneinrichtung (12), die fest mit der Führungsschiene verbunden ist.

4. Fensterheber nach Patentanspruch 3, bei dem das elastische Teil an der Zapfeneinrichtung, die ein Wellenzapfen der Rolle ist, angebracht ist.

## Revendications

1. Dispositif lève-vitre comprenant :
- un élément de rail (3) fixé à l'intérieur d'une porte;
- une poulie (4) montée sur ledit élément de rail;
- un moyen d'entraînement (6) fixé à l'intérieur de ladite porte pour faire subir un mouvement ascendant et descendant à la vitre (2) de la porte le long dudit élément de rail;
- un élément de fil (7) passant sur ladite poulie et le moyen d'entraînement (9, 10) pour transmettre une force motrice à ladite vitre de la fenêtre;
- un élément de patte d'attache (8) fixé à ladite vitre de la fenêtre et relié opérationnellement audit élément de fil, caractérisé par :
- un élément élastique (11) prévu sur ladite poulie pour éviter que ledit élément de rail et la vitre de la fenêtre ne soient en contact.

2. Dispositif lève-vitre selon la revendication 1, dans lequel ladite poulie est prévue sur la partie supérieure dudit élément de rail.

3. Dispositif lève-vitre selon la revendication 1, comprenant en outre :
- un moyen d'ergot (12) fixé audit élément de rail.

4. Dispositif lève-vitre selon la revendication 3, dans lequel ledit élément élastique est monté sur ledit moyen d'ergot, qui est l'arbre de pivotement de ladite poulie.
